# EUROPEAN PATENT APPLICATION

(11) **EP 4 651 335 A1**
(43) Date of publication of application: **19.11.2025**
(21) Application number: 24807387.6
(22) Date of filing: 22.04.2024
(51) Int. Cl.: H02J 7/00, H02J 7/02, H04N 5/63

(54) **CHARGING/DISCHARGING DEVICE, OPERATING METHOD OF CHARGING/DISCHARGING DEVICE, AND DISPLAY APPARATUS COMPRISING CHARGING/DISCHARGING DEVICE**

(30) Priority: 12.05.2023 KR 20230061738
(71) Applicant: Samsung Electronics Co., Ltd., Suwon-si, Gyeonggi-do 16677 (KR)
(72) Inventor: JOO, Sungyong, Suwon-si, Gyeonggi-do 16677 (KR); KANG, Shinho, Suwon-si, Gyeonggi-do 16677 (KR); KIM, Jeongwoo, Suwon-si, Gyeonggi-do 16677 (KR)
(74) Representative: Appleyard Lees IP LLP
(86) International application number: PCT/KR2024/005427
(87) International publication number: WO 2024/237508

(57) **Abstract**

Provided are a charging/discharging apparatus, an operation method of the charging/discharging apparatus, and a display apparatus including the charging/discharging apparatus. The charging/discharging apparatus includes a charging unit comprising circuitry configured to charge a battery pack, and a direct current (DC)-DC converter configured to convert a battery voltage of the battery pack into a voltage for operating the display apparatus, wherein, in a first mode based on an alternating current (AC) power source being applied to the display apparatus, the charging/discharging apparatus charges the battery pack with a battery voltage less than a secondary voltage generated by the display apparatus from the AC power source through the charging unit, and in a second mode based on the AC power source not being applied to the display apparatus, the charging/discharging apparatus delivers the battery voltage of the battery pack to the display apparatus.

## Description

### [Technical Field]

The disclosure relates to a charging/discharging apparatus, an operation method of the charging/discharging apparatus, and a display apparatus including the charging/discharging apparatus. For example, the disclosure relates to a charging/discharging apparatus for supplying a voltage to a display apparatus, and a display apparatus for operating according to the charging/discharging apparatus.

### [Background Art]

In general, a display apparatus such as a television (TV) includes a power supply device, for example, a switched-mode power supply (SMPS), for supplying operating power to each component of the display apparatus. The power supply device receives alternating current (AC) power, which may be commercial power, converts the AC power into a direct current (DC) voltage at a level required for a power supply target, and supplies the DC power to the power supply target.

Recently, research on movable display apparatuses is in progress. The movable display apparatus may be freely moved while operating with power supplied from a battery pack even when no AC power is available. However, in order to use the battery pack, a user needs to charge the battery pack. Because the battery pack needs to be charged using AC power separately from the display apparatus, the user has the inconvenience of having to charge the battery pack in advance before using the movable display apparatus.

### [Disclosure]

### [Technical Solution]

According to an example embodiment of the disclosure, a charging/discharging apparatus for supplying a voltage to a display apparatus may include: a charging unit comprising charging circuitry configured to charge a battery pack, and a direct current (DC)-DC converter configured to convert a battery voltage of the battery pack into a voltage for operating the display apparatus.

According to an example embodiment of the disclosure, in a first mode where an alternating current (AC) power source is applied to the display apparatus, the charging/discharging apparatus may be configured to charge the battery pack with a battery voltage lower than a secondary voltage generated by the display apparatus from the AC power source through the charging unit.

According to an example embodiment of the disclosure, in a second mode where the AC power source is not applied to the display apparatus, the charging/discharging apparatus may be configured to deliver the battery voltage of the battery pack to the display apparatus.

According to an example embodiment of the disclosure, a method, performed by a charging/discharging apparatus, of supplying a voltage to a display apparatus may include: in a first mode based on an AC power source being applied to the display apparatus, charging a battery pack with a battery voltage lower than a secondary voltage generated by the display apparatus from the AC power source, through a charging unit of the charging/discharging apparatus, and in a second mode based on the AC power source not being applied to the display apparatus, delivering the battery voltage of the battery pack to the display apparatus.

According to an example embodiment of the disclosure, a display apparatus may include: a power supply configured to generate a secondary voltage from an AC power source, and a charging/discharging apparatus including a charging unit comprising circuitry configured to charge a battery pack, and a DC-DC converter configured to convert a battery voltage of the battery pack into a voltage for operating the display apparatus.

According to an example embodiment of the disclosure, in a first mode where an AC power source is applied to the display apparatus, the display apparatus may be configured to operate based on a secondary voltage of the power supply.

According to an example embodiment of the disclosure, in the first mode, the display apparatus may be configured to charge the battery pack with a battery voltage from the AC power source through the charging unit of the charging/discharging apparatus.

The battery voltage of the battery pack may be lower than the secondary voltage of the power supply.

### [Description of Drawings]

The above and other aspects, features and advantages of certain embodiments of the present disclosure will be more apparent from the following detailed description, taken in conjunction with the accompanying drawings, in which:
FIG. 1 is a diagram illustrating an example power supply system of a display apparatus according to various embodiments;
FIG. 2 is a block diagram illustrating example configurations of a display apparatus, a charging/discharging apparatus, and a battery pack, according to various embodiments;
FIG. 3 is a diagram illustrating an example power supply system operating in an alternating current (AC) power mode, according to various embodiments;
FIG. 4 is a diagram illustrating an example power supply system operating in a battery mode, according to various embodiments;
FIG. 5 is a flowchart illustrating example operations of a charging/discharging apparatus according to various embodiments;
FIG. 6 is a flowchart illustrating example operations of a display apparatus according to various embodiments;
FIG. 7 is a waveform diagram illustrating voltages measured in a display apparatus, according to various embodiments;
FIG. 8 is a diagram illustrating an example power supply system operating in a standby mode, according to various embodiments;
FIG. 9 is a flowchart illustrating example operations of the charging/discharging apparatus in a standby mode, according to various embodiments;
FIG. 10 is a flowchart illustrating example operations of a display apparatus in a standby mode, according to various embodiments;
FIG. 11 is a circuit diagram illustrating example configurations of a display apparatus, a charging/discharging apparatus, and a battery pack, according to various embodiments;
FIG. 12 is diagram illustrating an enlarged view of a power supply and a charging/discharging apparatus of a display apparatus, according to various embodiments;
FIG. 13 is a block diagram illustrating example configurations of a display apparatus, a charging/discharging apparatus, and a battery pack, according to various embodiments; and
FIG. 14 is a block diagram illustrating example configurations of a display apparatus, a charging/discharging apparatus, and a battery pack, according to various embodiments.

### [Mode for Invention]

The terms used herein will be briefly described, and then the disclosure will be described in greater detail.

Although the terms used herein are selected from among common terms that are currently widely used in consideration of their functions in the disclosure, the terms may be different according to an intention of one of ordinary skill in the art, a precedent, or the advent of new technology. In some cases, the terms may be arbitrarily selected, in which case, the meaning of those terms will be described in detail in the corresponding part of the detailed description. Therefore, the terms used herein are not merely designations of the terms, but the terms are defined based on the meaning of the terms and content throughout the disclosure.

Throughout the present disclosure, when a part "includes" a component, the part may additionally include other components rather than excluding other components as long as there is no particular opposing recitation. In addition, as used herein, the terms such as "...er (or)", "... unit", "... module", etc., denote a unit that performs at least one function or operation, which may be implemented as hardware or software or a combination thereof.

Hereinafter, various example embodiments of the disclosure will be described with reference to the accompanying drawings. The disclosure may, however, be embodied in many different forms and should not be construed as being limited to an embodiment set forth herein. In order to clearly describe the disclosure, portions that are not relevant to the description of the disclosure may be omitted, and similar reference numerals are assigned to similar elements throughout the present disclosure.

In various example embodiments of the disclosure, the term "user" may refer, for example, to a person who controls systems, functions, or operations, and may include a developer, an administrator, or an installer.

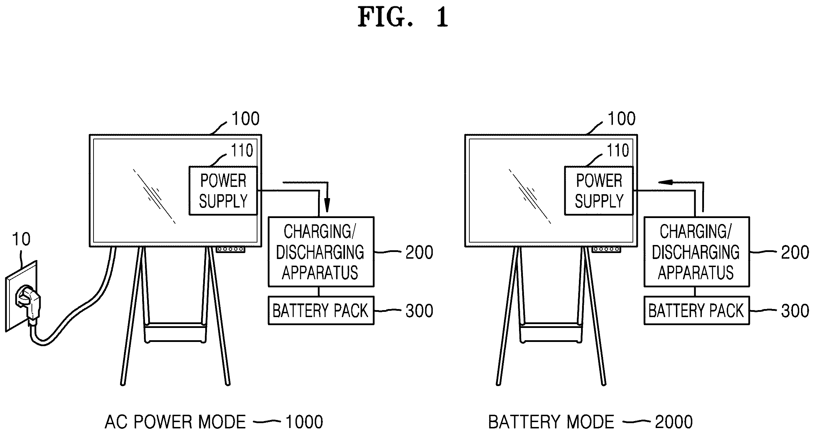

FIG. 1 is a diagram illustrating an example power supply system of a display apparatus according to various embodiments.

Referring to FIG. 1, a power supply system according to an embodiment of the disclosure may include a display apparatus (e.g., including a display) 100, a charging/discharging apparatus (e.g., including circuitry) 200, and a battery pack (e.g., including a battery) 300. The charging/discharging apparatus 200 may be connected to a power supply 110 of the display apparatus 100, and the battery pack 300 may be connected to the power supply 110 of the display apparatus 100 through the charging/discharging apparatus 200.

In the power supply system according to an embodiment of the disclosure, the charging/discharging apparatus 200 may be attached to and detached from the display apparatus 100. For example, when the charging/discharging apparatus 200 is detached from the display apparatus 100, the display apparatus 100 may generally receive power from an alternating current (AC) power source 10 through the power supply 110 embedded in the display apparatus 100. When the charging/discharging apparatus 200 is attached to the display apparatus 100, the display apparatus 100 may receive power from the AC power source 10 through the power supply 110, or may receive a battery voltage of the battery pack 300 through the charging/discharging apparatus 200.

In the disclosure, the display apparatus 100 and the charging/discharging apparatus 200 will be described with reference to an example where the charging/discharging apparatus 200 is attached to the display apparatus 100. In the disclosure, the charging/discharging apparatus 200 may be one of components included in the display apparatus 100.

The display apparatus 100 according to an embodiment of the disclosure may be a movable display apparatus. For example, the display apparatus 100 may include a portable display apparatus such as a smartboard or an electronic blackboard.

The display apparatus 100 according to an embodiment of the disclosure may operate based on the AC power source 10 in a state where the display apparatus 100 is connected to the AC power source 10, and in the disclosure, this may be referred to as an AC power mode 1000 or a first mode. In addition, the display apparatus 100 according to an embodiment of the disclosure may operate based on a battery voltage of the battery pack 300 in a state where the display apparatus 100 is not connected to the AC power source 10, and in the disclosure, this may be referred to as a battery mode 2000 or a second mode.

The display apparatus 100 according to an embodiment of the disclosure, when connected to the AC power source 10, may charge the battery pack 300 according to the AC power mode 1000. In addition, the display apparatus 100 according to an embodiment of the disclosure, when not connected to the AC power source 10, may operate according to the battery mode 2000, and thus, a user may freely move the display apparatus 100 to a desired location and use it.

In the AC power mode 1000, the display apparatus 100 may be connected to both the AC power source 10 and the battery pack 300.

In the AC power mode 1000, the display apparatus 100 may generate a voltage for operating the display apparatus 100, through the power supply 110. For example, the power supply 110 may receive power from the AC power source 10, convert the power into a direct current (DC) voltage at a level required for an operation of the display apparatus 100, and supply the DC voltage to each component of the display apparatus 100. The power supply 110 may include, for example, a switched-mode power supply (SMPS) or the like embedded in the display apparatus 100. For example, the display apparatus 100 may operate based on a DC voltage generated through the power supply 110.

In the AC power mode 1000, the display apparatus 100 may charge the battery pack 300 through the charging/discharging apparatus 200. For example, the charging/discharging apparatus 200 may generate a DC voltage required for the operation of the display apparatus 100 using the power received from the AC power source 10 through the power supply 110, and charge the battery pack 300 using the remaining power.

In AC power mode 1000, the battery pack 300 may be charged by the charging/discharging apparatus 200. For example, the battery pack 300 may receive a voltage based on the AC power source 10 through the charging/discharging apparatus 200, and store a battery voltage. In the AC power mode 1000, the battery pack 300 may store a battery voltage corresponding to a DC voltage at a level required for an operation of the display apparatus 100.

In an embodiment of the disclosure, there may be a difference between the battery voltage stored in the battery pack 300 and the DC voltage generated by the power supply 110 from the AC power source 10. For example, the battery voltage stored in the battery pack 300 may be lower than the DC voltage generated by the power supply 110 from the AC power source 10. In an embodiment of the disclosure, as the battery voltage of the battery pack 300 is implemented to be lower than the DC voltage of the power supply 110, a current may not flow from the battery pack 300 to the power supply 110. For example, a diode arranged between the power supply 110 and the battery pack 300 may block a current from the battery pack 300 to the power supply 110. Accordingly, the battery pack 300 may be charged with the battery voltage, and battery power may not be consumed.

When the display apparatus 100 is connected to both the AC power source 10 and the battery pack 300 in the AC power mode 1000, the display apparatus 100 may operate by consuming power from the AC power source 10 and may not consume power of the battery pack 300. When the charging/discharging apparatus 200 and the battery pack 300 are connected in parallel to the power supply 110 to which the AC power source 10 is applied, the charging/discharging apparatus 200 may charge the battery pack 300 without discharging the battery pack 300.

The display apparatus 100 according to an embodiment of the disclosure may be connected to one AC power source 10, and may generate, through the power supply 110, power for operating the display apparatus 100, while charging the battery pack 300 through the charging/discharging apparatus 200. Thus, because the user does not need to separately provide an AC power source for operating the display apparatus 100 and another AC power for charging the battery pack 300, convenience may be improved.

In the battery mode 2000, the display apparatus 100 may not be connected to the AC power source 10, but may be connected to the battery pack 300.

In the battery mode 2000, the display apparatus 100 may obtain a voltage for operating the display apparatus 100, through the charging/discharging apparatus 200 and the battery pack 300. For example, the charging/discharging apparatus 200 may discharge a battery voltage charged in the battery pack 300. For example, the charging/discharging apparatus 200 may deliver the battery voltage of the battery pack 300 to the display apparatus 100. In addition, for example, the charging/discharging apparatus 200 may convert the battery voltage charged in the battery pack 300 into power required for an operation of the display apparatus 100, and deliver the converted voltage to the display apparatus 100. The display apparatus 100 may operate based on the voltage delivered through the battery pack 300 and the charging/discharging apparatus 200. In the battery mode 2000, the battery pack 300 may be discharged by the charging/discharging apparatus 200.

In the battery mode 2000, when the display apparatus 100 is not connected to the AC power source 10 but is connected to the battery pack 300, the display apparatus 100 may consume power of the battery pack 300. For example, because the battery voltage of the battery pack 300 is greater than the DC voltage of the power supply 110, the charging/discharging apparatus 200 may perform control such that a current according to the battery voltage of the battery pack 300 flows through the display apparatus 100. The display apparatus 100 according to an embodiment of the disclosure may be supplied with power through the charging/discharging apparatus 200 and the battery pack 300 without the AC power source 10, and thus, the display apparatus 100 that may be moved to a desired location may be provided to the user.

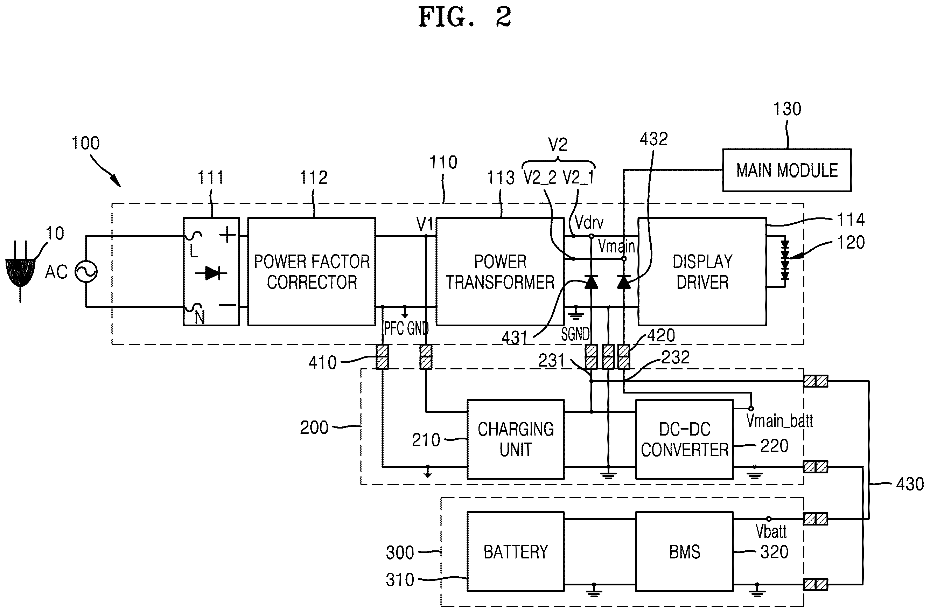

FIG. 2 is a block diagram illustrating example configurations of a display apparatus, a charging/discharging apparatus, and a battery pack, according to various embodiments.

Referring to FIG. 2, the display apparatus 100 according to an embodiment of the disclosure may include the power supply 110, a display 120, and a main module (e.g., including various circuitry) 130.

The display apparatus 100 may operate by receiving a voltage based on the AC power source 10 through the power supply 110. The display apparatus 100 may operate by receiving a voltage based on the battery pack 300 through the charging/discharging apparatus 200.

The power supply 110 according to an embodiment of the disclosure may include a first rectifier 111, a power factor corrector (e.g., including circuitry) 112, a power transformer 113, and a display driver (e.g., including circuitry) 114.

The power supply 110 may generate power for the display apparatus 100 to operate, from the AC power source 10. The power supply 110 may receive power of the AC power source 10 from an external device, convert the power into DC power required for an operation of each component, such as the display 120 and the main module 130, and supply the DC power to the corresponding component. For example, the power supply 110 may include a converter implemented as an isolated SMPS.

The first rectifier 111 may rectify power received from the AC power source 10. The first rectifier 111 may convert the received AC power into DC power. For example, the first rectifier 111 may supply a voltage or a current in one direction. For example, the first rectifier 111 may be implemented as a half-wave or full-wave circuit, for example, a bridge diode, for rectification.

The power factor corrector 112 may correct the power factor of the DC power obtained through AC-DC conversion by the first rectifier 111, and output a DC voltage with the corrected power factor. For example, the power factor corrector 112 may output a primary voltage V1, which is a DC voltage of which the power factor is improved based on the AC power source 10. For example, the primary voltage V1 is an output voltage of the power factor corrector 112, and is an input voltage of the power transformer 113. For example, the primary voltage V1 may be 380 V to 400 V, but is not limited thereto.

The power transformer 113 may include a transformer of which the primary (input unit) and the secondary (output unit) are insulated. The power transformer 113 may adjust the primary voltage V1 output from the power factor corrector 112 so as to supply a secondary voltage V2, which is a DC voltage at a constant level, to the display 120 and the main module 130. For example, the power transformer 113 may generate a first secondary voltage V2_1 corresponding to a driving voltage Vdrv for driving the display 120, based on the primary voltage V1. For example, the power transformer 113 may generate a second secondary voltage V2_2 corresponding to an operating voltage Vmain for operating the main module 130, based on the primary voltage V1. The power transformer 113 may be implemented as, for example, a DC-DC local link converter (LLC), but is not limited thereto.

The display driver 114 may supply, to the display 120, the driving voltage Vdrv necessary for the display 120 to display an image (or a video image).

The display 120 may display an image (or a video image). For example, the display 120 may display an image according to received image information. For example, the image information may be stored in an internal memory of the main module 130 or may be received from an external device. The display 120 may include a plurality of pixels including light-emitting diodes (LEDs), organic LEDs (OLEDs), and the like. In an embodiment of the disclosure, the display 120 may operate based on the driving voltage Vdrv received from the display driver 114. In an embodiment of the disclosure, the display 120 may be supplied with the first secondary voltage V2_1 or a battery voltage Vbatt, in response to the driving voltage Vdrv.

The main module 130 may include various processing circuitry configured to control the overall operation of the display apparatus 100. The main module 130 may receive an image signal, process the image signal, and display an image based on the processed image signal. The main module 130 may receive an audio signal, process the audio signal, and output an audio based on the processed audio signal. The main module 130 may be a software component, a hardware component, or a combination of a hardware component and a software component. In a case where the main module 130 includes a hardware component, the main module 130 may include a printed circuit board (PCB). The main module 130 may include at least one processor and a memory. The processor according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. In an embodiment of the disclosure, the main module 130 may operate based on the operating voltage Vmain. In an embodiment of the disclosure, in response to the operating voltage Vmain, the main module 130 may be supplied with the second secondary voltage V2_2, or may be supplied with a voltage Vmain_batt converted from the battery voltage Vbatt.

When the charging/discharging apparatus 200 is attached to the display apparatus 100 according to an embodiment of the disclosure, the display apparatus 100 may further include the charging/discharging apparatus 200.

The charging/discharging apparatus 200 according to an embodiment of the disclosure may connect the battery pack 300 to the display apparatus 100 such that the display apparatus 100 may be used as a portable display apparatus. For example, the charging/discharging apparatus 200 may be connected between the battery pack 300 and the power supply 110.

The charging/discharging apparatus 200 according to an embodiment of the disclosure may be connected to the power supply 110 through connectors 410 and 420. The charging/discharging apparatus 200 may be freely attached to or detached from the power supply 110 through the connectors 410 and 420. For example, an input unit of the charging/discharging apparatus 200 may be connected to the primary voltage V1 terminal of the power supply 110 through the connector 410. For example, an output unit of the charging/discharging apparatus 200 may be connected to the secondary voltage V2 terminal of the power supply 110 through the connector 420. For example, the charging/discharging apparatus 200 may receive the primary voltage V1 output from the power factor corrector 112. For example, the charging/discharging apparatus 200 may output a voltage based on the battery voltage of the battery pack 300, to the secondary voltage V2 terminal.

The charging/discharging apparatus 200 according to an embodiment of the disclosure may include a charging unit (e.g., including charging circuitry) 210 and a DC-DC converter 220. The charging unit 210 may be arranged at the input unit of the charging/discharging apparatus 200 and may be connected to the connector 410. The DC-DC converter 220 may be arranged at the output of the charging/discharging apparatus 200 and may be connected to the connector 420.

The charging unit 210 according to an embodiment of the disclosure may receive a DC voltage generated from the power supply 110, so as to charge the battery pack 300. For example, the charging unit 210 may be connected to the primary voltage V1 terminal of the power supply 110 and may receive the primary voltage V1. The charging unit 210 may receive the primary voltage V1, convert the primary voltage V1 into an appropriate voltage (or a fully-charged voltage) for charging a battery 310 provided in the battery pack 300, and charge the battery 310. For example, the charging unit 210 may convert the primary voltage V1 into the battery voltage Vbatt. The charging unit 210 may supply the converted battery voltage Vbatt to the battery pack 300.

The DC-DC converter 220 according to an embodiment of the disclosure may receive the battery voltage Vbatt from the battery pack 300 to supply a voltage for the display apparatus 100 to operate. For example, the DC-DC converter 220 may convert the battery voltage Vbatt of the battery pack 300 into a voltage for the display apparatus 100 to operate. For example, the DC-DC converter 220 may generate power for the main module 130 to operate, and supply the power to the main module 130.

The charging/discharging apparatus 200 according to an embodiment of the disclosure may include a first voltage line 231 and a second voltage line 232 both arranged at the output unit. The first voltage line 231 and the second voltage line 232 may be different from each other, and may be electrically separated from each other.

The first voltage line 231 may connect the battery pack 300 to the power supply 110, and may directly deliver the battery voltage Vbatt to the power supply 110. For example, the first voltage line 231 may be connected to the first secondary voltage V2_1 terminal arranged between the power transformer 113 and the display driver 114, through the connector 420.

The second voltage line 232 may connect the DC-DC converter 220 to the power supply 110, and may deliver the voltage Vmain_batt converted from the battery voltage Vbatt, to the power supply 110. For example, the second voltage line 232 may be connected to the second secondary voltage V2_2 terminal arranged between the power transformer 113 and the main module 130, through the connector 420.

The charging/discharging apparatus 200 according to an embodiment of the disclosure may deliver the battery voltage Vbatt of the battery pack 300 to the first secondary voltage V2_1 terminal of the power supply 110, through the first voltage line 231. For example, the charging/discharging apparatus 200 may deliver the battery voltage Vbatt to the display driver 114 through the first voltage line 231. For example, the battery voltage Vbatt may be applied directly to the display driver 114.

In an embodiment of the disclosure, the battery voltage Vbatt of the battery pack 300 may correspond to the driving voltage Vdrv required by the display driver 114 to drive the display 120. For example, the battery voltage Vbatt may be used as the driving voltage Vdrv.

In an embodiment of the disclosure, when the driving voltage Vdrv of the display apparatus 100 needs to be kept relatively high, the display driver 114 may include a boost LED driver. For example, the boost LED driver may receive the battery voltage Vbatt to generate the driving voltage Vdrv that is higher than the battery voltage Vbatt.

The charging/discharging apparatus 200 according to an embodiment of the disclosure may deliver the voltage Vmain_batt to the second secondary voltage V2_2 terminal of the power supply 110 through the second voltage line 232. For example, the charging/discharging apparatus 200 may deliver the voltage Vmain_batt to the main module 130 through the second voltage line 232. For example, the battery voltage Vbatt may be converted into the voltage Vmain_batt through the DC-DC converter 220, and then applied to the main module 130.

In an embodiment of the disclosure, the voltage Vmain_batt converted through the DC-DC converter 220 may correspond to the operating voltage Vmain for operating the main module 130. For example, the voltage Vmain_batt converted through the DC-DC converter 220 may be used as the operating voltage Vmain. For example, the voltage Vmain_batt converted through the DC-DC converter 220 may be about 12 V.

In an embodiment of the disclosure, the voltage Vmain_batt converted through the DC-DC converter 220 may be lower than the secondary voltage V2 generated by the display apparatus 100 from the AC power source 10. For example, the voltage Vmain_batt may be lower than the second secondary voltage V2_2.

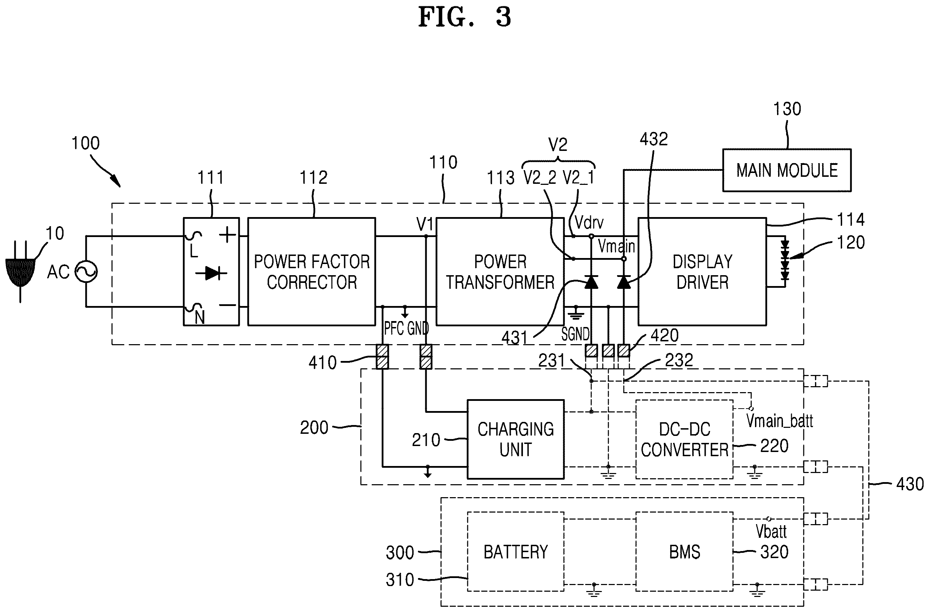

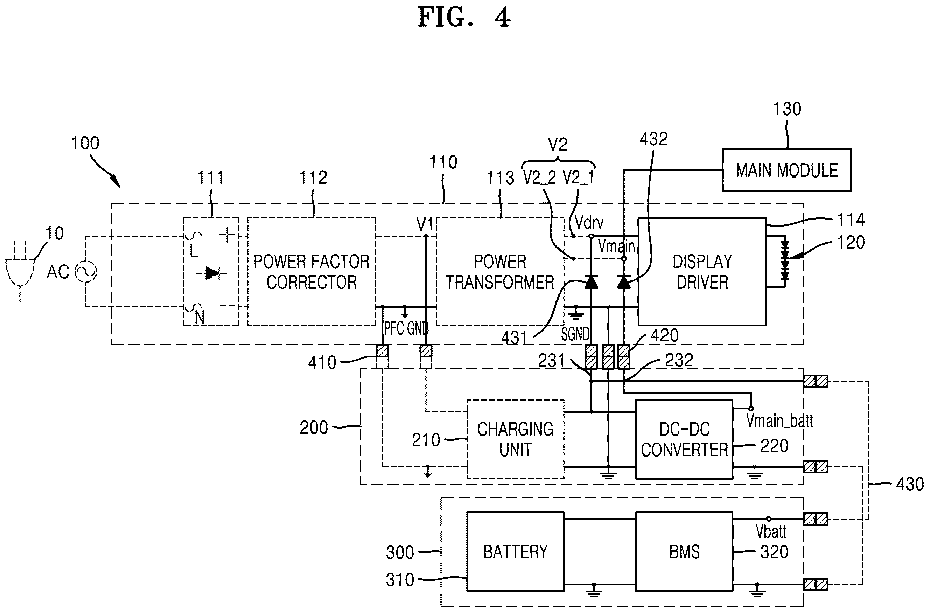

In the AC power mode 1000 where the AC power source 10 is connected to the display apparatus 100, the charging/discharging apparatus 200 according to an embodiment of the disclosure may charge the battery pack 300 based on the AC power source 10. In the battery mode 2000 where the AC power source 10 is not connected to the display apparatus 100, the charging/discharging apparatus 200 according to an embodiment of the disclosure may supply power for the display apparatus 100 to operate, based on a voltage charged in the battery pack 300. Even when the display apparatus 100 according to an embodiment of the disclosure is not connected to the AC power source 10, the display apparatus 100 may operate by receiving a voltage from the battery pack 300 through the charging/discharging apparatus 200. Operations in the AC power mode 1000 will be described in greater detail below with reference to in FIG. 3, and operations in the battery mode 2000 will be described in greater detail below with reference to FIG. 4.

The display apparatus 100 according to an embodiment of the disclosure may include a diode arranged between the power supply 110 and the charging/discharging apparatus 200. When the DC voltage of the charging/discharging apparatus 200 is lower than the DC voltage generated by the power supply 110, the diode arranged between the power supply 110 and the charging/discharging apparatus 200 may not deliver the DC voltage of the charging/discharging apparatus 200 to the display apparatus 100.

For example, the display apparatus 100 may include a first diode 431 and a second diode 432.

The first diode 431 may be arranged between the first voltage line 231 and the first secondary voltage V2_1 terminal of the power supply 110. When a voltage applied to the first voltage line 231 is higher than the first secondary voltage V2_1, the first diode 431 may allow a current to flow. When the voltage applied to the first voltage line 231 is lower than the first secondary voltage V2_1, the first diode 431 may block a current.

The second diode 432 may be arranged between the second voltage line 232 and the second secondary voltage V2_2 terminal of the power supply 110. When a voltage applied to the second voltage line 232 is higher than the second secondary voltage V2_2, the second diode 432 may allow a current to flow. When the voltage applied to the second voltage line 232 is lower than the second secondary voltage V2_2, the second diode 432 may block a current.

The charging/discharging apparatus 200 according to an embodiment of the disclosure may be connected to the battery pack 300 through a DC cable 430. The charging/discharging apparatus 200 may be freely attached to or detached from the battery pack 300 through the DC cable 430. The DC cable 430 may deliver a DC voltage between the charging/discharging apparatus 200 and the battery pack 300.

The battery pack 300 according to an embodiment of the disclosure may include the battery 310 and a battery management system (BMS) (e.g., including various circuitry) 320. The battery pack 300 according to an embodiment of the disclosure may be charged or discharged by the charging/discharging apparatus 200.

The battery 310 according to an embodiment of the disclosure may be a rechargeable battery. The battery 310 may be connected to the charging/discharging apparatus 200 through the BMS 320. For example, the battery 310 may be connected to the charging unit 210 and thus may be charged by receiving power from the charging unit 210. For example, the battery 310 may be connected to the first voltage line 231 of the charging/discharging apparatus 200. For example, the battery 310 may be connected to the DC-DC converter 220 of the charging/discharging apparatus 200. For example, the battery 310 may include batteries in a parallel or serial configuration. For example, the battery 310 may be in a 16S1P structure with 16 cells in series and 1 cell in parallel, but is not limited thereto.

The BMS 320 according to an embodiment of the disclosure may include various circuitry and be configured to optimally maintain and manage the state of the battery 310. For example, the BMS 320 may perform charge/discharge control of the battery 310 considering the state of charge (SOC) and the state of health (SOH). In addition, the BMS 320 may prevent and/or reduce the battery 310 from overheating due to a rapid temperature rise, by controlling the temperature of the battery 310.

The battery pack 300 according to an embodiment of the disclosure may be charged by the charging/discharging apparatus 200, and may be discharged by the charging/discharging apparatus 200. For example, the battery pack 300 may be charged in the AC power mode 1000 where the AC power source 10 is connected to the display apparatus 100, and may be discharged in the battery mode 2000 where the AC power source 10 is not connected to the display apparatus 100.

The battery pack 300 according to an embodiment of the disclosure may receive a voltage based on the AC power source 10 through the charging/discharging apparatus 200, and store the battery voltage Vbatt through the battery 310. The battery pack 300 may receive a voltage based on the primary voltage V1 generated from the power supply 110, and store the battery voltage Vbatt.

In an embodiment of the disclosure, the battery voltage Vbatt stored in the battery pack 300 may be lower than the secondary voltage V2 generated by the power supply 110 from the AC power source 10. For example, the battery voltage Vbatt of the battery pack 300 may be lower than the first secondary voltage V2_1 generated by the power transformer 113.

Because the input unit of the charging/discharging apparatus 200 according to an embodiment of the disclosure is connected to the primary voltage V1 terminal of the power supply 110, and the output unit of the charging/discharging apparatus 200 is connected to the secondary voltage V2 terminal, the charging/discharging apparatus 200 may be easily connected to the power supply 110 previously provided in the display apparatus 100. Thus, the movable display apparatus 100 may be implemented relatively easily.

Hereinafter, example operations of the display apparatus 100, the charging/discharging apparatus 200, and the battery pack 300 in the AC power mode 1000 and the battery mode 2000 will be described in greater detail with reference to FIGS. 3 and 4.

FIG. 3 is a diagram illustrating an example power supply system operating in an AC power mode, according to various embodiments.

Referring to FIG. 3, in the AC power mode 1000, the display apparatus 100 may be connected to both the AC power source 10 and the battery pack 300. In the AC power mode 1000, the display apparatus 100 may operate based on the AC power source 10 through the power supply 110. In the AC power mode 1000, the charging unit 210 of the charging/discharging apparatus 200 may operate. In the AC power mode 1000, the battery pack 300 may be charged.

In the AC power mode 1000 according to an embodiment of the disclosure, the display apparatus 100 may operate based on the secondary voltage V2 of the power supply 110. For example, the power supply 110 may generate the first secondary voltage V2_1 from the AC power source 10 and deliver the first secondary voltage V2_1 to the display driver 114. For example, the first secondary voltage V2_1 may be used as the driving voltage Vdrv. In addition, for example, in the AC power mode 1000, the power supply 110 may generate the second secondary voltage V2_2 from the AC power source 10 and deliver the second secondary voltage V2_2 to the main module 130. For example, the second secondary voltage V2_2 may be used as the operating voltage Vmain. For example, the second secondary voltage V2_2 may be about 13 V.

In the AC power mode 1000 according to an embodiment of the disclosure, the display apparatus 100 may charge the battery pack 300 from the AC power source 10 through the charging/discharging apparatus 200. For example, the charging/discharging apparatus 200 may charge the battery pack 300 from the AC power source 10. For example, the charging/discharging apparatus 200 may receive, through the charging unit 210, the primary voltage V1 generated by the power supply 110 from the AC power source 10. For example, the charging/discharging apparatus 200 may convert the primary voltage V1 into the battery voltage Vbatt for charging the battery pack 300, through the charging unit 210. The charging/discharging apparatus 200 may supply the converted battery voltage Vbatt to the battery pack 300. The battery pack 300 may be charged through the charging/discharging apparatus 200.

For example, through the charging unit 210, the charging/discharging apparatus 200 may receive the primary voltage V1 generated by the power supply 110 from the AC power source 10, convert the primary voltage V1 into an appropriate voltage (or a fully charged voltage) for charging the battery 310 provided in the battery pack 300, and charge the battery 310. For example, part of the primary voltage V1 generated by the power supply 110 from the AC power source 10 may be used to operate the display apparatus 100, and the remaining part may be used to charge the battery pack 300. The charging/discharging apparatus 200 may charge the battery pack 300 with remaining power other than power required for an operation of the display apparatus 100, among power generated from the AC power source 10.

In an embodiment of the disclosure, the battery voltage Vbatt of the battery pack 300 may be lower than the DC voltage generated by the power supply 110 from the AC power source 10. For example, the battery voltage Vbatt of the battery pack 300 may be lower than the secondary voltage V2 generated by the power transformer 113. For example, the battery voltage Vbatt may be lower than the first secondary voltage V2_1. Accordingly, a current may not flow from the battery pack 300 to the display apparatus 100 (or the power supply 110). For example, a current may not flow through the first diode 431 arranged between the battery voltage Vbatt terminal and the first secondary voltage V2_1 terminal.

In an embodiment of the disclosure, the voltage Vmain_batt converted through the DC-DC converter 220 may be lower than the DC voltage generated by the power supply 110 from the AC power source 10. For example, the voltage Vmain_batt converted through the DC-DC converter 220 may be lower than the secondary voltage V2 generated by the power transformer 113. For example, the voltage Vmain_batt may be lower than the second secondary voltage V2_2. Accordingly, a current may not flow from the charging/discharging apparatus 200 to the display apparatus 100 (or the power supply 110). For example, a current may not flow through the second diode 432 arranged between the voltage Vmain_batt terminal and the second secondary voltage V2_2 terminal.

When the display apparatus 100 is connected to both the AC power source 10 and the battery pack 300 in the AC power mode 1000 according to an embodiment of the disclosure, the display apparatus 100 may operate by consuming power from the AC power source 10 and may not consume power of the battery pack 300. For example, as there is a difference between the battery voltage Vbatt of the battery pack 300 and the secondary voltage V2 of the power supply 110, the charging/discharging apparatus 200 may perform an operation of charging the battery pack 300, but may not perform an operation of discharging the battery pack 300. For example, the charging operation of the charging/discharging apparatus 200 may refer to an operation of charging the battery pack 300 with the battery voltage Vbatt through the charging unit 210. For example, the discharging operation of the charging/discharging apparatus 200 may refer to an operation of converting the battery voltage Vbatt through the DC-DC converter 220. For example, the discharging operation of the charging/discharging apparatus 200 may refer to an operation of delivering the battery voltage Vbatt to the power supply 110 through the first voltage line 231.

Accordingly, the charging/discharging apparatus 200 may charge the battery pack 300 while the display apparatus 100 operates based on the AC power source 10.

The display apparatus 100 according to an embodiment of the disclosure may generate power for operating the display apparatus 100 and charge the battery pack 300 using one AC power source 10. Thus, the inconvenience of the user having to separately charge the battery pack 300 in order to use the portable display apparatus may be minimized and/or reduced.

FIG. 4 is a diagram illustrating an example power supply system operating in a battery mode, according to various embodiments.

Referring to FIG. 4, in the battery mode 2000, the display apparatus 100 may not be connected to the AC power source 10, but may be connected to the battery pack 300 through the charging/discharging apparatus 200. In the battery mode 2000, the power supply 110 does not receive power from the AC power source 10 and thus may not operate. In the battery mode 2000, the DC-DC converter 220 of the charging/discharging apparatus 200 may operate. In the battery mode 2000, the display apparatus 100 may operate based on the battery voltage of the battery pack 300, through the charging/discharging apparatus 200. In the battery mode 2000, the battery pack 300 may be discharged.

In the battery mode 2000 according to an embodiment of the disclosure, the charging/discharging apparatus 200 may deliver the battery voltage Vbatt of the battery pack 300 to the power supply 110. For example, the charging/discharging apparatus 200 may discharge the battery pack 300.

In an embodiment of the disclosure, the charging/discharging apparatus 200 may deliver the battery voltage Vbatt of the battery pack 300 to the display apparatus 100 through the first voltage line 231. For example, the charging/discharging apparatus 200 may deliver the battery voltage Vbatt to the first secondary voltage V2_1 terminal of the power supply 110 through the first voltage line 231. For example, the charging/discharging apparatus 200 may deliver the battery voltage Vbatt to the display driver 114 through the first voltage line 231. For example, the battery voltage Vbatt may be applied directly to the display driver 114. The battery voltage Vbatt of the battery pack 300 may correspond to the driving voltage Vdrv required by the display driver 114 to drive the display 120. For example, the battery voltage Vbatt may be used as the driving voltage Vdrv.

In an embodiment of the disclosure, the charging/discharging apparatus 200 may deliver the voltage Vmain_batt converted from the battery voltage Vbatt through the DC-DC converter 220, to the display apparatus 100 through the second voltage line 232. In an embodiment of the disclosure, the charging/discharging apparatus 200 may deliver the voltage Vmain_batt to the second secondary voltage V2_2 terminal of the power supply 110 through the second voltage line 232. For example, the charging/discharging apparatus 200 may deliver the voltage Vmain_batt to the main module 130 through the second voltage line 232. For example, the battery voltage Vbatt may be converted into the voltage Vmain_batt through the DC-DC converter 220, and then applied to the main module 130. The voltage Vmain_batt converted through the DC-DC converter 220 may correspond to the operating voltage Vmain for operating the main module 130. For example, the voltage Vmain_batt converted through the DC-DC converter 220 may be used as the operating voltage Vmain. For example, the voltage Vmain_batt converted through the DC-DC converter 220 may be about 12 V.

In an embodiment of the disclosure, the display apparatus 100 may operate based on the battery voltage Vbatt of the battery pack 300 received through the charging/discharging apparatus 200.

For example, the display apparatus 100 may receive the battery voltage Vbatt of the battery pack 300 through the charging/discharging apparatus 200. For example, the display 120 and the main module 130 may operate based on the battery voltage Vbatt. For example, the display 120 may operate based on the battery voltage Vbatt received through the first secondary voltage V2_1 terminal. For example, the main module 130 may operate based on the voltage Vmain_batt received through the second secondary voltage V2_2 terminal.

In an embodiment of the disclosure, even when the display apparatus 100 is not connected to the AC power source 10, the display apparatus 100 may operate based on the power of the battery pack 300. Accordingly, the movable display apparatus 100 may be implemented.

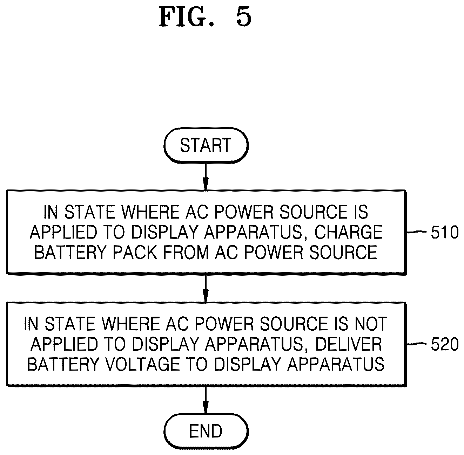

FIG. 5 is a flowchart illustrating example operations of a charging/discharging apparatus according to various embodiments.

Referring to FIG. 5, in operation 510, the charging/discharging apparatus 200 may charge the battery pack 300 from the AC power source 10, in a state where the AC power source 10 is applied to the display apparatus 100.

In an embodiment of the disclosure, the charging/discharging apparatus 200 may receive, through the charging unit 210, the primary voltage V1 generated by the power supply 110 from the AC power source 10. For example, the charging unit 210 may receive the primary voltage V1, which is a DC voltage generated by the power factor corrector 112 from the AC power source 10. In an embodiment of the disclosure, the charging/discharging apparatus 200 may convert the primary voltage V1 into the battery voltage Vbatt for charging the battery pack 300, through the charging unit 210. The charging/discharging apparatus 200 may supply the converted battery voltage Vbatt to the battery pack 300. The battery pack 300 may be charged through the charging/discharging apparatus 200.

For example, through the charging unit 210, the charging/discharging apparatus 200 may receive a DC voltage generated by the power supply 110 from the AC power source 10, convert the DC voltage into an appropriate voltage (or a fully charged voltage) for charging the battery 310 provided in the battery pack 300, and charge the battery 310. For example, part of the primary voltage V1 generated by the power supply 110 from the AC power source 10 may be used to operate the display apparatus 100, and the remaining part may be used to charge the battery pack 300. The charging/discharging apparatus 200 may charge the battery pack 300 with remaining power other than power required for an operation of the display apparatus 100, among power generated from the AC power source 10.

In an embodiment of the disclosure, the display apparatus 100 may operate by receiving a voltage based on the AC power source 10 through the power supply 110. For example, the display apparatus 100 may operate based on the secondary voltage V2 of the power supply 110. For example, in the AC power mode 1000, the power supply 110 may generate the first secondary voltage V2_1 from the AC power source 10, and deliver the first secondary voltage V2_1 to the display driver 114. For example, the first secondary voltage V2_1 may correspond to the driving voltage Vdrv required by the display driver 114 to drive the display 120. For example, the first secondary voltage V2_1 may be used as the driving voltage Vdrv.

In addition, for example, in the AC power mode 1000, the power supply 110 may generate the second secondary voltage V2_2 from the AC power source 10 and deliver the second secondary voltage V2_2 to the main module 130. For example, the first secondary voltage V2_1 may correspond to the operating voltage Vmain for operating the main module 130. For example, the second secondary voltage V2_2 may be used as the operating voltage Vmain. For example, the second secondary voltage V2_2 may be about 13 V.

In an embodiment of the disclosure, the battery voltage Vbatt of the battery pack 300 may be lower than the DC voltage generated by the power supply 110 from the AC power source 10. For example, the battery voltage Vbatt of the battery pack 300 may be lower than the secondary voltage V2 generated by the power transformer 113. For example, the battery voltage Vbatt may be lower than the first secondary voltage V2_1. Accordingly, a current may not flow from the battery pack 300 to the display apparatus 100 (or the power supply 110). For example, a current may not flow through the first diode 431 arranged between the battery voltage Vbatt terminal and the first secondary voltage V2_1 terminal.

In an embodiment of the disclosure, the voltage Vmain_batt converted through the DC-DC converter 220 may be lower than the DC voltage generated by the power supply 110 from the AC power source 10. For example, the voltage Vmain_batt converted through the DC-DC converter 220 may be lower than the secondary voltage V2 generated by the power transformer 113. For example, the voltage Vmain_batt may be lower than the second secondary voltage V2_2. Accordingly, a current may not flow from the charging/discharging apparatus 200 to the display apparatus 100 (or the power supply 110). For example, a current may not flow through the second diode 432 arranged between the voltage Vmain_batt terminal and the second secondary voltage V2_2 terminal.

When the display apparatus 100 is connected to both the AC power source 10 and the battery pack 300 in the AC power mode 1000 according to an embodiment of the disclosure, the display apparatus 100 may operate by consuming power from the AC power source 10 and may not consume power of the battery pack 300. For example, as there is a difference between the battery voltage of the battery pack 300 and the secondary voltage of the power supply 110, the charging/discharging apparatus 200 may perform an operation of charging the battery pack 300, but may not perform an operation of discharging the battery pack 300.

Accordingly, the charging/discharging apparatus 200 may charge the battery pack 300 while the display apparatus 100 operates based on the AC power source 10.

In operation 520, the charging/discharging apparatus 200 may deliver the battery voltage of the battery pack 300 to the display apparatus 100 in a state where the AC power source 10 is not applied to the display apparatus 100. For example, in the battery mode 2000, the charging/discharging apparatus 200 may discharge the battery pack 300. For example, in the battery mode 2000, the display apparatus 100 may operate based on the battery voltage.

In an embodiment of the disclosure, the charging/discharging apparatus 200 may deliver the battery voltage Vbatt of the battery pack 300 to the power supply 110 of the display apparatus 100 through the first voltage line 231. In an embodiment of the disclosure, the charging/discharging apparatus 200 may deliver the battery voltage Vbatt to the first secondary voltage V2_1 terminal of the power supply 110 through the first voltage line 231. For example, the charging/discharging apparatus 200 may deliver the battery voltage Vbatt to the display driver 114 through the first voltage line 231. For example, the battery voltage Vbatt may be applied directly to the display driver 114.

In an embodiment of the disclosure, the battery voltage Vbatt of the battery pack 300 may correspond to the driving voltage Vdrv required by the display driver 114 to drive the display 120. For example, the battery voltage Vbatt may be used as the driving voltage Vdrv.

In an embodiment of the disclosure, the charging/discharging apparatus 200 may deliver the voltage Vmain_batt converted from the battery voltage Vbatt through the DC-DC converter 220, to the display apparatus 100 through the second voltage line 232. In an embodiment of the disclosure, the charging/discharging apparatus 200 may deliver the voltage Vmain_batt to the second secondary voltage V2_2 terminal of the power supply 110 through the second voltage line 232. For example, the charging/discharging apparatus 200 may deliver the voltage Vmain_batt to the main module 130 through the second voltage line 232. For example, the battery voltage Vbatt may be converted into the voltage Vmain_batt through the DC-DC converter 220, and then applied to the main module 130.

In an embodiment of the disclosure, the voltage Vmain_batt converted through the DC-DC converter 220 may correspond to the operating voltage Vmain for operating the main module 130. For example, the voltage Vmain_batt converted through the DC-DC converter 220 may be used as the operating voltage Vmain. For example, the voltage Vmain_batt converted through the DC-DC converter 220 may be about 12 V.

In an embodiment of the disclosure, even when the display apparatus 100 is not connected to the AC power source 10, the charging/discharging apparatus 200 may supply power through the battery pack 300. Accordingly, the movable display apparatus 100 may be implemented.

In an embodiment of the disclosure, the charging/discharging apparatus 200 may supply power to the display apparatus 100 using a primary voltage terminal generated in the power supply 110 of the display apparatus 100 as an input unit and using a secondary voltage terminal of the power supply 110 as an output unit, and thus may be easily applied to a general power supply 110.

Depending on the purpose of use of the display apparatus 100, the charging/discharging apparatus 200 may perform only operation 510 or only operation 520, but the disclosure is not limited thereto.

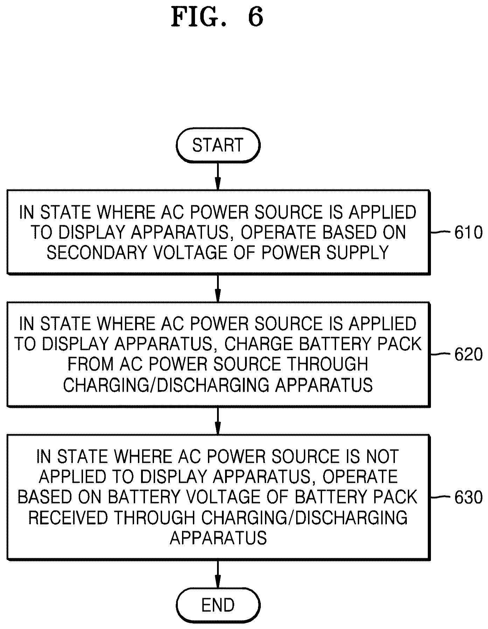

FIG. 6 is a flowchart illustrating example operations of a display apparatus according to various embodiments.

Referring to FIG. 6, in operation 610, the display apparatus 100 may operate based on the secondary voltage V2 of the power supply 110, in a state where the AC power source 10 is applied to the display apparatus 100.

For example, in the AC power mode 1000, the power supply 110 may generate the first secondary voltage V2_1 from the AC power source 10, and deliver the first secondary voltage V2_1 to the display driver 114. For example, the first secondary voltage V2_1 may correspond to the driving voltage Vdrv required by the display driver 114 to drive the display 120. For example, the first secondary voltage V2_1 may be used as the driving voltage Vdrv.

In addition, for example, in the AC power mode 1000, the power supply 110 may generate the second secondary voltage V2_2 from the AC power source 10 and deliver the second secondary voltage V2_2 to the main module 130. For example, the first secondary voltage V2_1 may correspond to the operating voltage Vmain for operating the main module 130. For example, the second secondary voltage V2_2 may be used as the operating voltage Vmain. For example, the second secondary voltage V2_2 may be about 13 V.

In operation 620, the display apparatus 100 may charge the battery pack 300 from the AC power source 10 through the charging/discharging apparatus 200, in a state where the AC power source 10 is applied to the display apparatus 100.

For example, the display apparatus 100 may charge the battery pack 300 from the AC power source 10 through the charging unit 210 of the charging/discharging apparatus 200. For example, the display apparatus 100 may receive, through the charging unit 210, the primary voltage V1, which is a DC voltage generated by the power factor corrector 112 from the AC power source 10. For example, the display apparatus 100 may convert the primary voltage V1 into the battery voltage Vbatt for charging the battery pack 300, through the charging unit 210. For example, the display apparatus 100 may supply, to the battery pack 300, the battery voltage Vbatt converted through the charging unit 210. In the AC power mode 1000 according to an embodiment of the disclosure, the battery pack 300 may be charged through the charging/discharging apparatus 200.

In the AC power mode 1000 according to an embodiment of the disclosure, the battery pack 300 may not be discharged. In an embodiment of the disclosure, the battery voltage Vbatt of the battery pack 300 may be lower than the secondary voltage V2 generated by the display apparatus 100 from the AC power source 10. For example, the battery voltage Vbatt of the battery pack 300 may be lower than the secondary voltage V2 generated by the power transformer 113. For example, the battery voltage Vbatt may be lower than the first secondary voltage V2_1.

In an embodiment of the disclosure, the voltage Vmain_batt converted through the DC-DC converter 220 may be lower than the secondary voltage V2 generated by the display apparatus 100 from the AC power source 10. For example, the voltage Vmain_batt may be lower than the second secondary voltage V2_2.

When the display apparatus 100 is connected to both the AC power source 10 and the battery pack 300 in the AC power mode 1000 according to an embodiment of the disclosure, the display apparatus 100 may operate by consuming power from the AC power source 10 and may not consume power of the battery pack 300. For example, as there is a difference between the battery voltage of the battery pack 300 and the DC voltage of the power supply 110, the display apparatus 100 may not use the power of the battery pack 300.

Accordingly, the display apparatus 100 may generate power for operating the display apparatus 100 and charge the battery pack 300 using one AC power source 10. Thus, the inconvenience of the user having to separately charge the battery pack 300 may be minimized and/or reduced.

In operation 630, the display apparatus 100 may operate based on the battery voltage Vbatt of the battery pack 300 received through the charging/discharging apparatus 200, in a state where the AC power source 10 is not applied to the display apparatus 100.

In an embodiment of the disclosure, the display apparatus 100 may receive the battery voltage Vbatt of the battery pack 300 through the charging/discharging apparatus 200. The display apparatus 100 may receive the battery voltage Vbatt through the first secondary voltage V2_1 terminal of the power supply 110. For example, the display apparatus 100 may deliver, to the display driver 114, the battery voltage Vbatt received through the first secondary voltage V2_1 terminal.

In an embodiment of the disclosure, the battery voltage Vbatt of the battery pack 300 may correspond to the driving voltage Vdrv required by the display driver 114 to drive the display 120. For example, the battery voltage Vbatt may be used as the driving voltage Vdrv.

In an embodiment of the disclosure, the display apparatus 100 may receive the voltage Vmain_batt converted from the battery voltage Vbatt, through the charging/discharging apparatus 200. The display apparatus 100 may receive the voltage Vmain_batt through the second secondary voltage V2_2 terminal of the power supply 110. For example, the display apparatus 100 may deliver, to the main module 130, the voltage Vmain_batt received through the second secondary voltage V2_2 terminal.

In an embodiment of the disclosure, the voltage Vmain_batt converted through the DC-DC converter 220 may correspond to the operating voltage Vmain for operating the main module 130. For example, the voltage Vmain_batt converted through the DC-DC converter 220 may be used as the operating voltage Vmain. For example, the voltage Vmain_batt converted through the DC-DC converter 220 may be about 12 V.

In an embodiment of the disclosure, even when the display apparatus 100 is not connected to the AC power source 10, the display apparatus 100 may operate based on the power of the battery pack 300. Accordingly, the movable display apparatus 100 may be implemented.

Depending on the purpose of use of the display apparatus 100, the display apparatus 100 may perform only operations 610 and 620, or only operation 630.

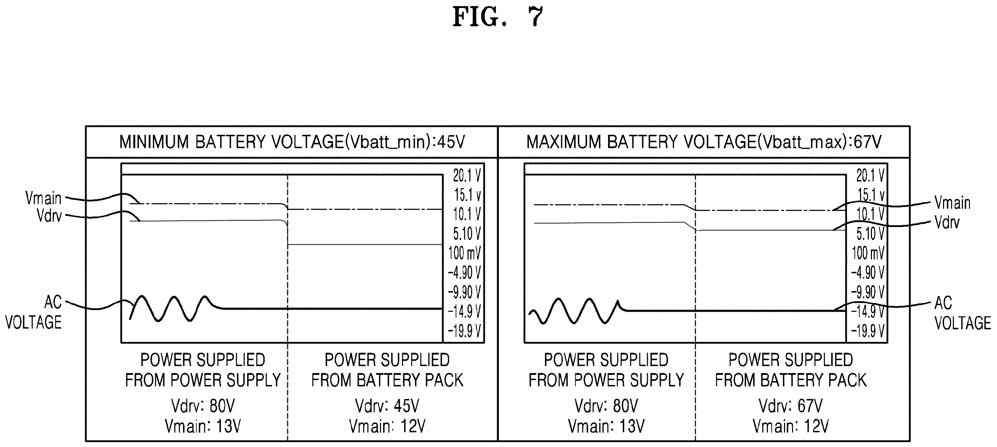

FIG. 7 is a waveform diagram illustrating voltages measured in a display apparatus, according to various embodiments.

Changes in waveforms of the operating voltage Vmain received by the main module 130, the driving voltage Vdrv received by the display 120, and an AC voltage of the AC power source 10 when changing from the AC power mode 1000 to the battery mode 2000 will be described with reference to FIG. 7.

FIG. 7 shows examples of voltage waveform diagrams when the battery voltage of the battery pack 300 is charged to the minimum and the maximum, respectively. For example, a minimum battery voltage Vbatt_min may be 45 V. For example, a maximum battery voltage Vbatt_max may be 67 V.

In the AC power mode 1000, the AC power source 10 may be applied to the display apparatus 100. In a state where the AC power source 10 is applied, the display apparatus 100 may operate based on the AC power source 10. The power supply 110 may generate secondary voltages corresponding to the operating voltage Vmain and the driving voltage Vdrv. For example, the power supply 110 may generate a voltage of 13 V corresponding to the operating voltage Vmain. For example, the power supply 110 may generate a voltage of 80 V corresponding to the driving voltage Vdrv. The main module 130 may receive the operating voltage Vmain of 13 V, and the display 120 may receive the driving voltage Vdrv of 80 V.

In the battery mode 2000, the AC power source 10 may not be applied to the display apparatus 100. In a state where the AC power source 10 is not applied, the display apparatus 100 may operate based on the battery voltage Vbatt. The charging/discharging apparatus 200 may deliver voltages corresponding to the operating voltage Vmain and the driving voltage Vdrv, based on the battery voltage Vbatt of the battery pack 300. For example, the charging/discharging apparatus 200 may generate a voltage of 12 V corresponding to the operating voltage Vmain, through the DC-DC converter 220. For example, the charging/discharging apparatus 200 may deliver the battery voltage Vbatt corresponding to the driving voltage Vdrv. For example, when the battery voltage charged in the battery pack 300 is the minimum, the charging/discharging apparatus 200 may deliver a voltage of 45 V. For example, when the battery voltage charged in the battery pack 300 is the maximum, the charging/discharging apparatus 200 may deliver a voltage of 67 V. The main module 130 may receive the operating voltage Vmain of 12 V. The display 120 may receive the driving voltage Vdrv of 45 V or 67 V.

In an embodiment of the disclosure, the voltage measured in the AC power mode 1000 and the voltage measured in the battery mode 2000 may be different from each other. The voltage measured in the AC power mode 1000 may be higher than the voltage measured in the battery mode 2000.

In an embodiment of the disclosure, the operating voltage Vmain (e.g., 13 V) received by the main module 130 in a state where the AC power source 10 is applied may be higher than the operating voltage Vmain (e.g., 12 V) received by the main module 130 in a state where the AC power source 10 is not applied. When changing from the AC power mode 1000 to the battery mode 2000, the operating voltage Vmain received by the main module 130 may decrease.

In an embodiment of the disclosure, the driving voltage Vdrv (e.g., 80 V) received by the display 120 in a state where the AC power source 10 is applied may be higher than the driving voltage Vdrv (e.g., 45 V or 67 V) received by the display 120 in a state where the AC power source 10 is not applied. When changing from the AC power mode 1000 to the battery mode 2000, the driving voltage Vdrv received by the display 120 may decrease.

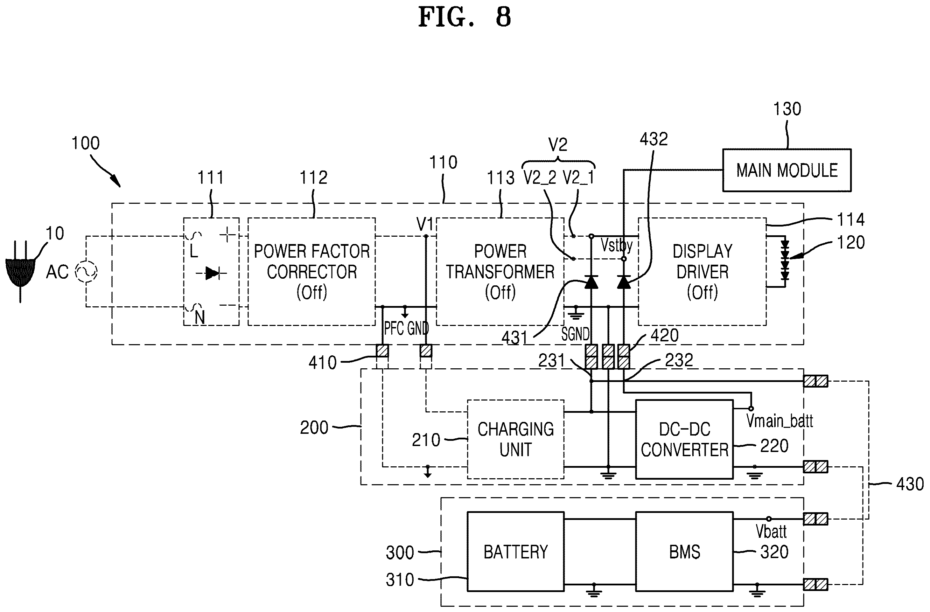

FIG. 8 is a diagram illustrating an example configuration of a power supply system operating in a standby mode, according to various embodiments.

Operations performed by the display apparatus 100, the charging/discharging apparatus 200, and the battery pack 300 when the display apparatus 100 is turned off in the AC power mode 1000 where the AC power source 10 is connected to the display apparatus 100 will be described in greater detail with reference to FIG. 8.

The display apparatus 100 may operate in a standby mode 800 to minimize and/or reduce power consumption while not in use, and power consumed in such a standby mode is referred to as standby power. In the disclosure, that the display apparatus 100 operates in the standby mode 800 may refer, for example, to the display 120 being in a power-off state. In the disclosure, that the display apparatus 100 operates in the standby mode 800 may refer, for example, to the display apparatus 100 operating any one of an input interface (e.g., an infrared receiver), Bluetooth (BT), and Wi-Fi for receiving a turn-on command from a user. For example, in order for the display apparatus 100 to operate in the standby mode 800, the main module 130 may receive a standby voltage for operating any one of the input interface (e.g., an infrared receiver), BT, and Wi-Fi.

In the standby mode 800 according to an embodiment of the disclosure, the power supply 110 may be in a turn-off state. For example, the power factor corrector 112, the power transformer 113, and the display driver 114 may be in a turn-off state, and the display 120 may be in a turn-off state. In the standby mode 800, the display apparatus 100 may operate based on the battery voltage Vbatt of the battery pack 300 received through the charging/discharging apparatus 200. In the standby mode 800, the display apparatus 100 may not operate based on the AC power source 10.

For example, in the standby mode 800, the charging/discharging apparatus 200 may deliver, to the power supply 110, a standby voltage converted from the battery voltage Vbatt through the DC-DC converter 220. For example, the DC-DC converter 220 may convert the battery voltage Vbatt of the battery pack 300 to generate a standby voltage Vstby. For example, the DC-DC converter 220 may deliver the standby voltage Vstby to the second secondary voltage V2_2 terminal of the power supply 110 through the second voltage line 232. For example, the charging/discharging apparatus 200 may deliver the standby voltage Vstby to the main module 130. For example, the main module 130 may operate in the standby mode 800 according to the standby voltage Vstby. For example, the main module 130 may operate any one of the input interface (e.g., an infrared receiver), BT, and Wi-Fi.

In addition, when the display apparatus 100 is in the turn-off state, it is unnecessary to supply power to the display 120, and thus, the charging/discharging apparatus 200 may not deliver, to the display 120, the battery voltage Vbatt corresponding to the driving voltage Vdrv.

When the display apparatus 100 is in the standby mode 800, the display apparatus 100 may operate based on the voltage of the battery pack 300 even when connected to the AC power source 10. For example, in the standby mode 800, the display apparatus 100 may not operate the power supply 110. Accordingly, the display apparatus 100 may reduce standby power consumed as the power supply 110 operates.

In addition, the efficiency of the battery voltage Vbatt stored in the battery pack 300 may be higher than efficiency generated as the power supply 110 generates a standby voltage based on the AC power source 10. For example, when the power supply 110 generates a standby voltage with power of 1 W or less based on the AC power source 10, the efficiency of the standby voltage may be 10 % to 15 %. However, because the battery voltage Vbatt stored in the battery pack 300 is a DC voltage stored with an efficiency of 88 %, the efficiency of the standby voltage generated based on the battery voltage Vbatt may be higher. Because high-efficiency battery power of the battery pack 300 is available, standby power consumption may be reduced.

In addition, in the standby mode 800, the power supply 110 does not convert the primary voltage V1 into the secondary voltage V2, and thus, the charging unit 210 of the charging/discharging apparatus 200 may charge the battery pack 300 using most of power of the primary voltage V1. Accordingly, the charging/discharging apparatus 200 may charge the battery pack 300 at high speed.

In addition, the display apparatus 100 according to an embodiment of the disclosure may operate to charge the battery pack 300 only in a late-night mode. The display apparatus 100 may be advantageous in countries where late-night electricity rates are low.

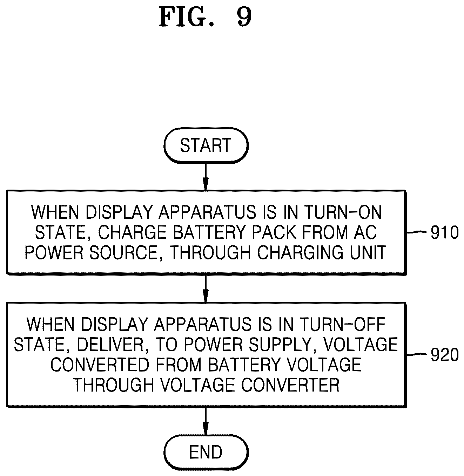

FIG. 9 is a flowchart illustrating example operations of the charging/discharging apparatus in a standby mode, according to various embodiments.

Operations performed by the charging/discharging apparatus 200 when the display apparatus 100 is turned on or turned off in the AC power mode 1000 where the AC power source 10 is connected to the display apparatus 100 will be described with reference to FIG. 9.

Referring to FIG. 9, in operation 910, when the display apparatus 100 is in a turn-on state, the charging/discharging apparatus 200 may charge the battery pack 300 from the AC power source 10, through the charging unit 210. For example, when the display apparatus 100 is in the turn-on state, the charging/discharging apparatus 200 may perform an operation corresponding to operation 510 of FIG. 5, and redundant descriptions thereof may not be repeated here.

In operation 920, when the display apparatus 100 is in a turn-off state, the charging/discharging apparatus 200 may deliver the battery voltage Vbatt to the power supply 110. For example, in the standby mode 800, the charging/discharging apparatus 200 may deliver, to the power supply 110, a standby voltage converted from the battery voltage Vbatt through the DC-DC converter 220. For example, the DC-DC converter 220 may deliver the standby voltage Vstby to the second secondary voltage V2_2 terminal of the power supply 110 through the second voltage line 232. For example, the charging/discharging apparatus 200 may deliver the standby voltage Vstby to the main module 130. For example, the main module 130 may operate in the standby mode 800 according to the standby voltage Vstby. For example, the main module 130 may operate any one of the input interface (e.g., an infrared receiver), BT, and Wi-Fi.

When the display apparatus 100 is in the turn-off state, it is unnecessary to supply power to the display 120, and thus, the charging/discharging apparatus 200 may not deliver, to the display 120, the battery voltage Vbatt corresponding to the driving voltage Vdrv.

When the display apparatus 100 is in the standby mode 800, the display apparatus 100 may operate based on the voltage of the battery pack 300 even when connected to the AC power source 10. For example, in the standby mode 800, the display apparatus 100 may not operate the power supply 110. Accordingly, the display apparatus 100 may reduce standby power consumed as the power supply 110 operates.

In addition, the efficiency of the battery voltage Vbatt stored in the battery pack 300 may be higher than efficiency generated as the power supply 110 generates a standby voltage based on the AC power source 10. For example, when the power supply 110 generates a standby voltage with power of 1 W or less based on the AC power source 10, the efficiency of the standby voltage may be 10 % to 15 %. However, because the battery voltage Vbatt stored in the battery pack 300 is a DC voltage stored with an efficiency of 88 %, the efficiency of the standby voltage generated based on the battery voltage Vbatt may be higher.

In addition, in the standby mode 800, the power supply 110 does not convert the primary voltage V1 into the secondary voltage V2, and thus, the charging unit 210 of the charging/discharging apparatus 200 may charge the battery pack 300 using most of power of the primary voltage V1. Accordingly, the charging/discharging apparatus 200 may charge the battery pack 300 at high speed.

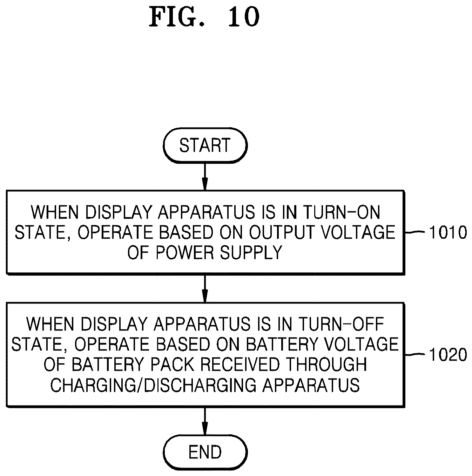

FIG. 10 is a flowchart illustrating example operations of a display apparatus in a standby mode, according to various embodiments.

Operations performed by the display apparatus 100 when the display apparatus 100 is turned on or turned off in the AC power mode 1000 where the AC power source 10 is connected to the display apparatus 100 will be described with reference to FIG. 10.

Referring to FIG. 10, in operation 1010, when the display apparatus 100 is in a turn-on state, the display apparatus 100 may operate based on output voltage of the power supply 110. For example, when the display apparatus 100 is in the turn-on state, the display apparatus 100 may charge the battery pack 300 from the AC power source 10, through the charging unit 210. For example, the display apparatus 100 may perform operations corresponding to operations 610 and 620 of FIG. 6, and redundant descriptions thereof may not be repeated here.

In operation 1020, when the display apparatus 100 is in the turn-off state, the display apparatus 100 may operate based on the battery voltage Vbatt of the battery pack 300 received through the charging/discharging apparatus 200. For example, in the standby mode 800, the display apparatus 100 may deliver, to the power supply 110, a standby voltage converted from the battery voltage Vbatt through the DC-DC converter 220. When the display apparatus 100 is in the turn-off state, it is unnecessary to supply power to the display 120, and thus, the charging/discharging apparatus 200 may not deliver, to the display 120, the battery voltage Vbatt corresponding to the driving voltage Vdrv.

When the display apparatus 100 is in the standby mode 800, the display apparatus 100 may operate based on the voltage of the battery pack 300 even when connected to the AC power source 10. For example, in the standby mode 800, the display apparatus 100 may not operate the power supply 110. Accordingly, the display apparatus 100 may reduce standby power consumed as the power supply 110 operates.

In addition, the efficiency of the battery voltage Vbatt stored in the battery pack 300 may be higher than efficiency generated as the power supply 110 generates a standby voltage based on the AC power source 10. For example, when the power supply 110 generates a standby voltage with power of 1 W or less based on the AC power source 10, the efficiency of the standby voltage may be 10 % to 15 %. However, because the battery voltage Vbatt stored in the battery pack 300 is a DC voltage stored with an efficiency of 88 %, the efficiency of the standby voltage generated based on the battery voltage Vbatt may be higher.

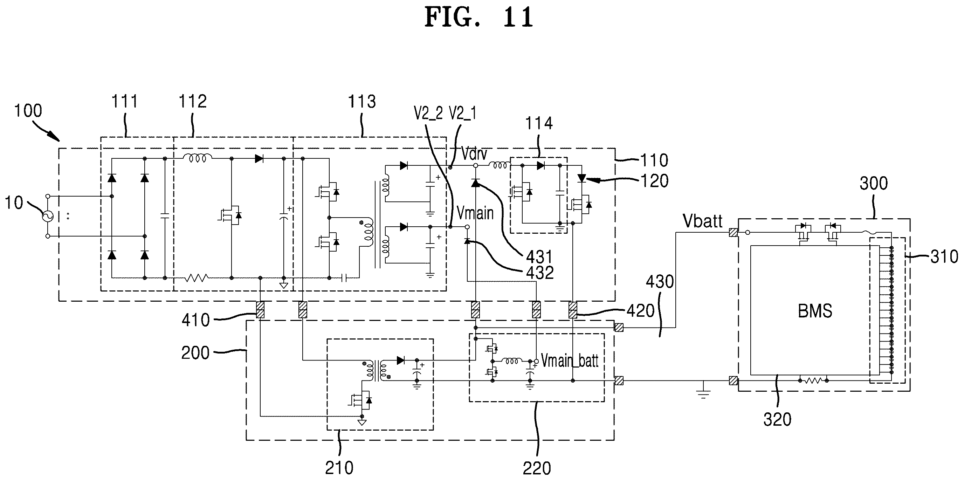

FIG. 11 is a circuit diagram illustrating an example configuration of a display apparatus, a charging/discharging apparatus, and a battery pack, according to various embodiments.

FIG. 11 illustrates an example circuit diagram of the power supply 110 and the display 120 of the display apparatus 100, a circuit diagram of the charging/discharging apparatus 200, and a circuit diagram of the battery pack 300.

The power supply 110 may include the first rectifier 111, the power factor corrector 112, the power transformer 113, and the display driver 114. The first rectifier 111 may rectify power received from the AC power source 10. The first rectifier 111 may be implemented as a bridge diode. The power factor corrector 112 may control a converter to output a DC voltage with an improved power factor, for example, the primary voltage V1. The power transformer 113 may adjust a DC voltage output from the power factor corrector 112 to generate the secondary voltage V2. The power transformer 113 may include a primary coil on the primary and a secondary coil on the secondary in which a predetermined voltage is induced by the primary coil. The power transformer 113 may include the primary coil and the secondary coil, and thus may generate the first secondary voltage V2_1 corresponding to the driving voltage Vdrv, and the second secondary voltage V2_2 corresponding to the operating voltage Vmain. The power transformer 113 may supply the first secondary voltage V2_1 to the display driver 114, and supply the second secondary voltage V2_2 to a main module (not shown).

The charging/discharging apparatus 200 may be connected to a terminal of the primary voltage V1, which is an output voltage of the power factor corrector 112. The charging unit 210 of the charging/discharging apparatus 200 may include a converter for converting the primary voltage V1 into the battery voltage Vbatt. For example, the charging unit 210 may include a primary coil, a secondary coil in which a predetermined voltage is induced by the primary coil, a rectifier diode that rectifies the voltage induced in the secondary coil, and a smoothing capacitor that smoothes a voltage output through the rectifier diode. The DC-DC converter 220 of the charging/discharging apparatus 200 may include a converter for converting the battery voltage Vbatt into a predetermined voltage. The DC-DC converter 220 may generate the voltage Vmain_batt converted from the battery voltage Vbatt. The DC-DC converter 220 may supply the voltage Vmain_batt to the second secondary voltage V2_2 terminal of the power supply 110 through the second diode 432. The charging/discharging apparatus 200 may supply the battery voltage Vbatt to the first secondary voltage V2_1 terminal of the power supply 110 through the first diode 431.

The circuit configurations of the display apparatus 100, charging/discharging apparatus 200, and battery pack 300 illustrated in FIG. 11 are examples, and the disclosure is not limited thereto. For example, the circuit configuration of the power supply 110 may be replaced with any type of circuit that may convert AC power to DC power and generate power required for each component of the display apparatus 100. For example, the circuit configuration of the charging/discharging apparatus 200 may be replaced with any type of circuit that may convert DC power to DC power at a predetermined level.

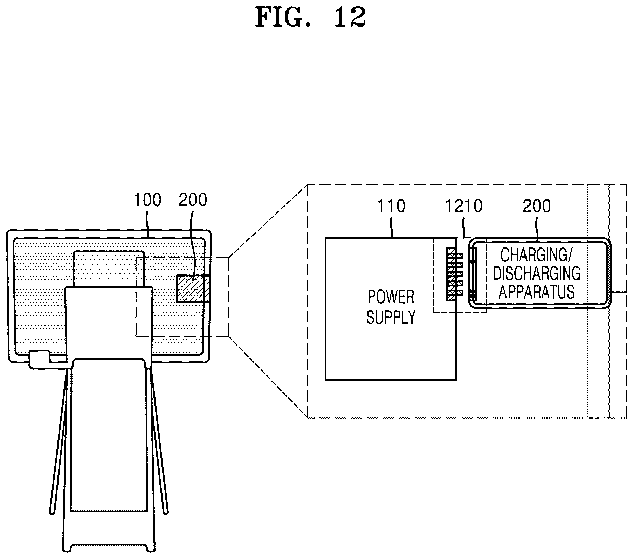

FIG. 12 is a diagram illustrating an enlarged view of a power supply and a charging/discharging apparatus of a display apparatus, according to various embodiments.

FIG. 12 shows a rear surface of the display apparatus 100, an enlarged view of the rear surface. The display apparatus 100 may include the power supply 110 embedded in the display apparatus 100, and the charging/discharging apparatus 200 that may be attached and detached through the power supply 110 and a connector 1210.

A user may connect the display apparatus 100 to the AC power source 10, then use the display apparatus 100 at a designated location, and then disconnect the AC power source 10 from the display apparatus 100 when the user wants to move. The user may freely attach the charging/discharging apparatus 200 to the power supply 110. The user may separately carry the charging/discharging apparatus 200 and the battery pack 300 to use the display apparatus 100 as a portable display apparatus.

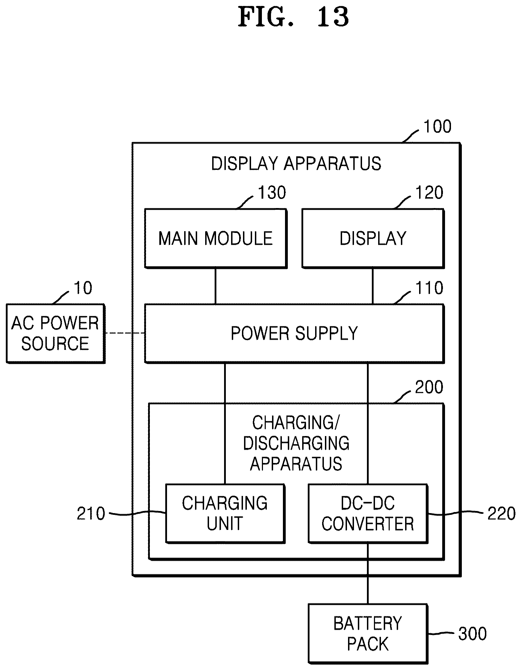

FIG. 13 is a block diagram illustrating example configurations of the display apparatus 100, the charging/discharging apparatus 200, and the battery pack 300, according to various embodiments.

Referring to FIG. 13, the display apparatus 100 may include the power supply 110, the display 120, and the main module (e.g., including processing circuitry) 130. The AC power source 10 may or may not be connected to the power supply 110 of the display apparatus 100. The charging/discharging apparatus 200 and the battery pack 300 may or may not be connected to the power supply 110 of the display apparatus 100.

The display apparatus 100 may include various types of electronic devices capable of receiving and outputting content, such as various smart devices, for example, televisions, computers (e.g., desktops, laptops, or tablets), smart phones, cellular phones, game consoles, music players, video players, medical devices, or home appliances. The display apparatus 100 according to an embodiment of the disclosure may include a portable display apparatus such as a smartboard or an electronic blackboard.

The power supply 110 may generate power for the display apparatus 100 to operate, from the AC power source 10. The power supply 110 may receive power of the AC power source 10 from an external device, convert the power into DC power required for an operation of each component, such as the display 120 and the main module 130, and supply the DC power to the corresponding component. For example, the power supply 110 may include a converter implemented as an isolated SMPS.

The display 120 may display an image (or a video image). For example, the display 120 may display an image according to received image information. For example, the image information may be stored in an internal memory of the main module 130 or may be received from an external device. The display 120 may include a plurality of pixels including LEDs, OLEDs, and the like.

The main module 130 may control the overall operation of the display apparatus 100. The main module 130 may receive an image signal, process the image signal, and display an image based on the processed image signal. The main module 130 may receive an audio signal, process the audio signal, and output an audio based on the processed audio signal. The main module 130 may be a software component, a hardware component, or a combination of a hardware component and a software component. In a case where the main module 130 includes a hardware component, the main module 130 may include a PCB. The main module 130 may include at least one processor and a memory. For example, the at least one processor may perform various operations by executing various software programs or instructions stored in the memory. The memory may store various software programs (or applications) for operating the display apparatus 100, and data and instructions for an operation of the display apparatus 100. The main module 130 may include an input interface such as an infrared receiver or a touch key. The main module 130 may include a communication unit such as a BT communication unit and a Wi-Fi communication unit. For example, the processor according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The charging/discharging apparatus 200 may connect the battery pack 300 to the display apparatus 100 such that the display apparatus 100 may be used as a portable display apparatus. For example, the charging/discharging apparatus 200 may be connected between the battery pack 300 and the power supply 110.

The charging/discharging apparatus 200 may include the charging unit (e.g., including circuitry) 210 and the DC-DC converter 220. The charging unit 210 may be arranged at the input unit of the charging/discharging apparatus 200 and may be connected to the connector 410.

The charging unit 210 may receive a DC voltage generated from the power supply 110, so as to charge the battery pack 300. For example, the charging unit 210 may receive the DC voltage of the power supply 110, convert the DC voltage into an appropriate voltage (or a fully charged voltage) for charging the battery 310 provided in the battery pack 300, and charge the battery 310. For example, the charging unit 210 may convert the DC voltage into the battery voltage Vbatt. The charging unit 210 may supply the converted battery voltage Vbatt to the battery pack 300.

The DC-DC converter 220 may receive the battery voltage Vbatt from the battery pack 300 to supply a voltage for the display apparatus 100 to operate. For example, the DC-DC converter 220 may convert the battery voltage Vbatt of the battery pack 300 into a voltage for the display apparatus 100 to operate. For example, the DC-DC converter 220 may generate power for the main module 130 to operate, and supply the power to the main module 130.

The battery pack 300 may be charged or discharged by the charging/discharging apparatus 200. The battery pack 300 may be connected to the charging unit 210 and thus may be charged by receiving power from the charging unit 210. The battery pack 300 may be connected to the DC-DC converter 220 and thus may supply power stored in the DC-DC converter 220.

According to an embodiment of the disclosure, a charging/discharging apparatus 200 for supplying a voltage to a display apparatus 100 may include a charging unit 210 configured to charge a battery pack 300, and a DC-DC converter 220 configured to convert a battery voltage of the battery pack 300 into a voltage for operating the display apparatus 100.

In a first mode 1000 where an AC power source 10 is applied to the display apparatus 100, the charging/discharging apparatus 200 according to an embodiment of the disclosure may charge the battery pack 300 from the AC power source 10 through the charging unit 210.

In a second mode 2000 where the AC power source 10 is not applied to the display apparatus 100, the charging/discharging apparatus 200 according to an embodiment of the disclosure may deliver the battery voltage Vbatt of the battery pack 300 to the power supply 110.

The battery voltage Vbatt of the battery pack 300 may be lower than a secondary voltage V2 generated by the display apparatus 100 from the AC power source 10.

According to an embodiment of the disclosure, a charging/discharging apparatus 200 for supplying a voltage to a display apparatus 100 may include a charging unit 210 configured to charge a battery pack 300, and a DC-DC converter 220 configured to convert a battery voltage of the battery pack 300 into a voltage for operating the display apparatus 100.

In a first mode 1000 where an AC power source 10 is applied to the display apparatus 100, the charging/discharging apparatus 200 according to an embodiment of the disclosure may charge the battery pack 300 with a battery voltage Vbatt that is lower than a secondary voltage V2 generated by the display apparatus 100 from the AC power source 10, through the charging unit 210. The battery voltage Vbatt according to an embodiment of the disclosure may be a voltage converted from the AC power source 10 through the charging unit 210.

In a second mode 2000 where the AC power source 10 is not applied to the display apparatus 100, the charging/discharging apparatus 200 according to an embodiment of the disclosure may deliver the battery voltage Vbatt of the battery pack 300 to the display apparatus 100.

The charging/discharging apparatus 200 according to an embodiment of the disclosure may receive, through the charging unit 210, the primary voltage V1 generated by the power supply 110 of the display apparatus 100 from the AC power source 10.

The charging/discharging apparatus 200 according to an embodiment of the disclosure may convert the primary voltage V1 into the battery voltage Vbatt for charging the battery pack 300, through the charging unit 210.

The charging/discharging apparatus 200 according to an embodiment of the disclosure may include a first voltage line 231 that, in the second mode 2000, delivers the battery voltage Vbatt to the power supply 110 of the display apparatus 100, and a second voltage line 232 that, in the second mode 2000, delivers, to the power supply 110, a voltage Vmain_batt converted from the battery voltage Vbatt through the DC-DC converter 220.

In the second mode 2000, the charging/discharging apparatus 200 according to an embodiment of the disclosure may deliver the battery voltage Vbatt to a terminal of a first secondary voltage V2_1 of the power supply 110 through the first voltage line 231.

In the second mode 2000, the charging/discharging apparatus 200 according to an embodiment of the disclosure may deliver the converted voltage Vmain_batt to a terminal of a second secondary voltage V2_2 of the power supply 110 through the second voltage line 232.

The charging/discharging apparatus 200 according to an embodiment of the disclosure may include first diodes 431 and 433 arranged between the first voltage line 231 and the terminal of the first secondary voltage V2_1 of the power supply 110, and second diodes 432 and 434 arranged between the second voltage line 232 and the terminal of the second secondary voltage V2_2 of the power supply 110.

The voltage Vmain_batt converted through the DC-DC converter 220 may be lower than the secondary voltage V2 generated by the power supply 110 of the display apparatus 100 from the AC power source 10.

When the display apparatus 100 is in a turn-off state in the first mode 1000, the charging/discharging apparatus 200 may deliver, to the display apparatus 100, a standby voltage converted from the battery voltage Vbatt through the DC-DC converter 220.

The charging/discharging apparatus 200 according to an embodiment of the disclosure may be connected between the power supply 110 of the display apparatus 100 and the battery pack 300.

According to an embodiment of the disclosure, a method, performed by a charging/discharging apparatus 200, of supplying a voltage to a display apparatus 100 may include, in a first mode 1000 where an AC power source 10 is applied to the display apparatus 100, charging a battery pack 300 with a battery voltage Vbatt that is lower than a secondary voltage V2 generated by the display apparatus 100 from the AC power source 10, through a charging unit 210 of the charging/discharging apparatus 200, and in a second mode 2000 where the AC power source 10 is not applied to the display apparatus 100, delivering the battery voltage Vbatt of the battery pack 300 to the display apparatus 100. The battery voltage Vbatt according to an embodiment of the disclosure may be a voltage converted from the AC power source 10 through the charging unit 210.

The charging of the battery pack 300 with the battery voltage Vbatt through the charging unit 210 in the first mode 1000 may include receiving, through the charging unit 210, a primary voltage V1 generated by a power supply 110 of the display apparatus 100 from the AC power source 10, and converting the primary voltage V1 into the battery voltage Vbatt for charging the battery pack 300 through the charging unit 210.

The delivering of the battery voltage Vbatt of the battery pack 300 to the display apparatus 100 in the second mode 2000 may include delivering the battery voltage Vbatt to the power supply 110 of the display apparatus 100 through a first voltage line 231, and delivering a voltage Vmain_batt converted from the battery voltage Vbatt through the DC-DC converter 220 of the charging/discharging apparatus 200, to the power supply 110 through a second voltage line 232.

The delivering of the battery voltage Vbatt of the battery pack 300 to the display apparatus 100 in the second mode 2000 may include delivering the battery voltage Vbatt to a terminal of a first secondary voltage V2_1 of the power supply 110 of the display apparatus 100 through the first voltage line 231, and delivering the converted voltage Vmain_batt to a terminal of a second secondary voltage V2_2 of the power supply 110 through the second voltage line 232.

The voltage Vmain_batt converted through the DC-DC converter 220 may be lower than the secondary voltage V2 generated by the power supply 110 of the display apparatus 100 from the AC power source 10.

The method, performed by the charging/discharging apparatus 200, of supplying a voltage to the display apparatus 100 according to an embodiment of the disclosure may further include, when the display apparatus 100 is in a turn-off state in the first mode 1000, delivering, to the display apparatus 100, a standby voltage converted from the battery voltage Vbatt through the DC-DC converter 220.

A display apparatus 100 according to an embodiment of the disclosure may include a power supply 110 configured to generate a secondary voltage V2 from an AC power source 10, and a charging/discharging apparatus 200 including a charging unit 210 configured to charge a battery pack 300, and a DC-DC converter 220 configured to convert a battery voltage Vbatt of the battery pack 300 into a voltage for operating the display apparatus 100.

In a first mode 1000 where an AC power source 10 is applied to the display apparatus 100, the display apparatus 100 according to an embodiment of the disclosure may operate based on a secondary voltage V2 of the power supply 110.

In the first mode 1000, the display apparatus 100 according to an embodiment of the disclosure may charge the battery pack 300 with a battery voltage Vbatt from the AC power source 10, through the charging unit 210 of the charging/discharging apparatus 200. The battery voltage Vbatt according to an embodiment of the disclosure may be a voltage converted from the AC power source 10 through the charging unit 210.

The battery voltage Vbatt of the battery pack 300 may be lower than the secondary voltage V2 of the power supply 110.

In a second mode 2000 where the AC power source 10 is not applied to the display apparatus 100, the display apparatus 100 according to an embodiment of the disclosure may operate based on the battery voltage Vbatt of the battery pack 300 received through the charging/discharging apparatus 200.

A voltage Vmain_batt converted from the battery voltage Vbatt through the DC-DC converter 220 may be lower than the secondary voltage V2 of the power supply 110.

The display apparatus 100 according to an embodiment of the disclosure may further include a display 120 that is driven according to a driving voltage Vdrv, and a main module 130 configured to operate according to an operating voltage.

Each of the battery voltage Vbatt of the battery pack 300 and a first secondary voltage V2_1 of the power supply 110 may correspond to the driving voltage Vdrv.

Each of the voltage Vmain_batt converted from the battery voltage Vbatt through the DC-DC converter 220 and a second secondary voltage V2_2 of the power supply 110 may correspond to the operating voltage Vmain.

The power supply 110 may include a power factor corrector 112 configured to generate a primary voltage V1 from the AC power source 10, and a power transformer 113 configured to generate the secondary voltage V2 from the primary voltage V1.

The display apparatus 100 according to an embodiment of the disclosure may receive the primary voltage V1 generated from the power factor corrector 112, through a charging unit 210 of the charging/discharging apparatus 200.

When the display apparatus 100 is in a turn-off state in the first mode 1000, the display apparatus 100 may operate based on the battery voltage Vbatt of the battery pack 300 received through the charging/discharging apparatus 200.

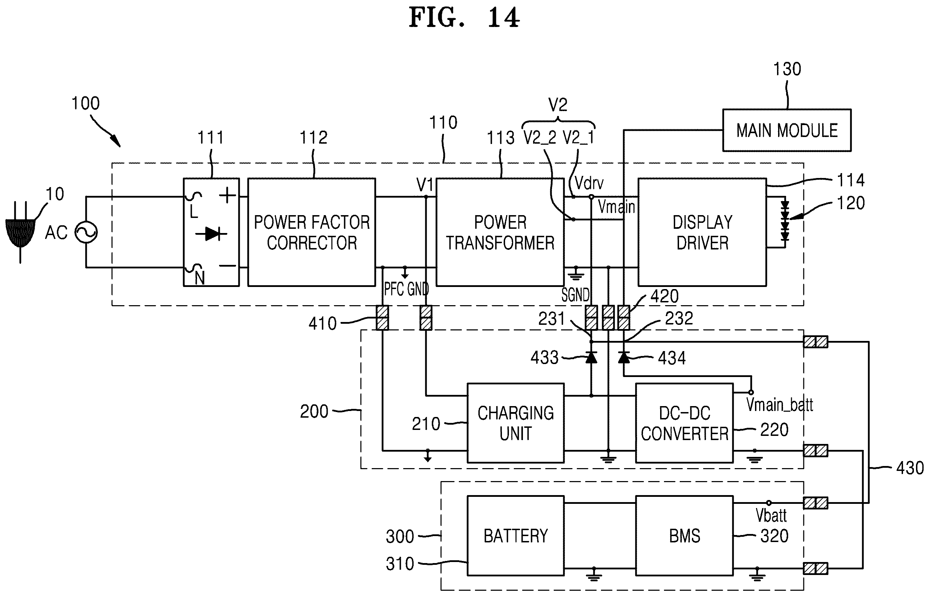

FIG. 14 is a block diagram illustrating example configurations of a display apparatus, a charging/discharging apparatus, and a battery pack, according to various embodiments.

Referring to FIG. 14, the charging/discharging apparatus 200 according to an embodiment of the disclosure may include a first diode 433 and a second diode 434. For example, the first diode 433 may be arranged on the first voltage line 231 of the charging/discharging apparatus 200, and the second diode 434 may be arranged on the second voltage line 232 of the charging/discharging apparatus 200.

The first diode 433 may be arranged between the first voltage line 231 and the first secondary voltage V2_1 terminal of the power supply 110. When a voltage applied to the first voltage line 231 is higher than the first secondary voltage V2_1, the first diode 433 may allow a current to flow. When the voltage applied to the first voltage line 231 is lower than the first secondary voltage V2_1, the first diode 433 may block a current.

The second diode 434 may be arranged between the second voltage line 232 and the second secondary voltage V2_2 terminal of the power supply 110. When a voltage applied to the second voltage line 232 is higher than the second secondary voltage V2_2, the second diode 434 may allow a current to flow. When the voltage applied to the second voltage line 232 is lower than the second secondary voltage V2_2, the second diode 434 may block a current.

The first diode 433 and the second diode 434 according to an embodiment of the disclosure are different from the first diode 431 and the second diode 432 of FIG. 2 in that the first diode 431 and the second diode 432 are arranged in the power supply 110.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment of the disclosure, methods according to an embodiment disclosed herein may be included in a computer program product and then provided. The computer program product may be traded as commodities between sellers and buyers. The computer program product may be distributed in the form of a machine-readable storage medium (e.g., a compact disc read-only memory (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A charging/discharging apparatus (200) configured to supply a voltage to a display apparatus (100), the charging/discharging apparatus (200) comprising:
a charging unit (210)comprising circuitry configured to charge a battery pack (300); and
a direct current (DC)-DC converter (220) configured to convert a battery voltage of the battery pack (300) into a voltage for operating the display apparatus (100),
wherein, in a first mode (1000) based on an alternating current (AC) power source (10)being applied to the display apparatus (100), the charging/discharging apparatus (200) is configured to charge the battery pack (300) with a battery voltage (Vbatt)less than a secondary voltage (V2) generated by the display apparatus (100) from the AC power source (10) through the charging unit (210), and
in a second mode (2000)based on the AC power source (10)not being applied to the display apparatus (100), the charging/discharging apparatus (200) is configured to deliver the battery voltage (Vbatt) of the battery pack (300) to the display apparatus (100).

2. The charging/discharging apparatus (200) of claim 1, wherein the charging/discharging apparatus (200) is configured to receive, through the charging unit (210), a primary voltage (V1) generated by the power supply (110) of the display apparatus (100) from the AC power source (10), and convert the primary voltage (V1) into the battery voltage (Vbatt) for charging the battery pack (300) through the charging unit (210).

3. The charging/discharging apparatus (200) of claim 1 or 2, further comprising:
a first voltage line (231)configured, in the second mode (2000)to deliver the battery voltage (Vbatt) to the power supply (110) of the display apparatus (100); and
a second voltage line (232) configured, in the second mode (2000), is configured to deliver, to the power supply (110), a voltage (Vmain_batt) converted from the battery voltage (Vbatt) through the DC-DC converter (220).

4. The charging/discharging apparatus (200) of claim 3, wherein, in the second mode (2000), the charging/discharging apparatus (200) is configured to deliver the battery voltage (Vbatt) to a terminal of a first secondary voltage (V2_1) of the power supply (110) through the first voltage line (231), and
in the second mode (2000), the charging/discharging apparatus (200) is configured to deliver the converted voltage (Vmain_batt) to a terminal of a second secondary voltage (V2_2) of the power supply (110) through the second voltage line (232).

5. The charging/discharging apparatus (200) of claim 4, further comprising:
first diodes (431 and 433) arranged between the first voltage line (231) and the terminal of the first secondary voltage (V2_1) of the power supply (110); and
second diodes (432 and 434) arranged between the second voltage line (232) and the terminal of the second secondary voltage (V2_2) of the power supply (110).

6. The charging/discharging apparatus (200) of any one of claims 1 to 5, wherein the voltage (Vmain_batt) converted through the DC-DC converter (220) is lower than the secondary voltage (V2) generated by the power supply (110) of the display apparatus (100) from the AC power source (10).

7. The charging/discharging apparatus (200) of any one of claims 1 to 6, wherein, based on the display apparatus (100) being in a turn-off state in the first mode (1000), the charging/discharging apparatus (200) is configured to deliver, to the display apparatus (100), a standby voltage converted from the battery voltage (Vbatt) through the DC-DC converter (220).

8. The charging/discharging apparatus (200) of any one of claims 1 to 7, wherein the charging/discharging apparatus (200) is connected between the power supply (110) of the display apparatus (100) and the battery pack (300).

9. A method, performed by a charging/discharging apparatus (200), of supplying a voltage to a display apparatus (100), the method comprising:
in a first mode (1000) based on an alternating current (AC) power source (10) being applied to the display apparatus (100), charging a battery pack (300) with a battery voltage (Vbatt) less than a secondary voltage (V2) generated by the display apparatus (100) from the AC power source (10), through a charging unit (210) of the charging/discharging apparatus (200); and
in a second mode (2000)based on the AC power source (10) not being applied to the display apparatus(100), delivering the battery voltage (Vbatt) of the battery pack (300) to the display apparatus (100).

10. A display apparatus (100) comprising:
a power supply (110) configured to generate a secondary voltage (V2) from an alternating current (AC) power source (10); and
a charging/discharging apparatus (200) comprising a charging unit (210)comprising circuitry configured to charge a battery pack (300), and a direct current (DC)-DC converter (220) configured to convert a battery voltage (Vbatt) of the battery pack (300) into a voltage for operating the display apparatus (100),
wherein the display apparatus (100) is configured to, in a first mode (1000) based on an alternating current (AC) power source (10) being applied to the display apparatus (100), operate based on a secondary voltage (V2) of the power supply (110), and in the first mode (1000), charge the battery pack (300) with a battery voltage (Vbatt) from the AC power source (10) through the charging unit (210) of the charging/discharging apparatus (200), and
the battery voltage (Vbatt) of the battery pack (300) is less than the secondary voltage (V2) of the power supply (110).

11. The display apparatus (100) of claim 10, wherein, in a second mode (2000) based on the AC power source (10) not being applied to the display apparatus (100), the display apparatus (100) is configured to operate based on the battery voltage (Vbatt) of the battery pack (300) received through the charging/discharging apparatus (200).

12. The display apparatus (100) of claim 10 or 11, wherein a voltage (Vmain_batt) converted from the battery voltage (Vbatt) through the DC-DC converter (220) is less than the secondary voltage (V2) of the power supply (110).

13. The display apparatus (100) of any one of claims 10 to 12, further comprising:
a display (120) that is configured to be driven according to a driving voltage (Vdrv); and
a main module (130)comprising circuitry configured to operate according to an operating voltage (Vmain),
wherein each of the battery voltage (Vbatt) of the battery pack (300) and a first secondary voltage (V2_1) of the power supply (110) corresponds to the driving voltage (Vdrv), and each of the voltage (Vmain_batt) converted from the battery voltage (Vbatt) through the DC-DC converter (220) and a second secondary voltage (V2_2) of the power supply (110) corresponds to the operating voltage (Vmain).

14. The display apparatus (100) of any one of claims 10 to 13, wherein the power supply (110) comprises a power factor corrector (112) configured to generate a primary voltage (V1) from the AC power source (10), and a power transformer (113) configured to generate the secondary voltage (V2) from the primary voltage (V1), and
the display apparatus (100) is configured to receive the primary voltage (V1) generated from the power factor corrector (112), through a charging unit (210) of the charging/discharging apparatus (200).

15. The display apparatus (100) of any one of claims 10 to 14, wherein, based on the display apparatus (100) being in a turn-off state in the first mode (1000), the display apparatus (100) is configured to operate based on the battery voltage (Vbatt) of the battery pack (300) received through the charging/discharging apparatus (200).
